# EUROPEAN PATENT APPLICATION

(11) **EP 4 528 496 A1**
(43) Date of publication of application: **26.03.2025**
(21) Application number: 23885098.6
(22) Date of filing: 03.11.2023
(51) Int. Cl.: G06F 9/451

(54) **PICTURE DISPLAY METHOD AND APPARATUS, AND STORAGE MEDIUM AND ELECTRONIC DEVICE**

(30) Priority: 04.11.2022 CN 202211379834
(71) Applicant: Beijing Zitiao Network Technology Co., Ltd., Beijing 100190 (CN)
(72) Inventor: ZHAO, Chunmeng, Beijing 100028 (CN)
(74) Representative: Williams, Michael David
(86) International application number: PCT/CN2023/129600
(87) International publication number: WO 2024/094174

(57) **Abstract**

Provided in the embodiments of the present disclosure are a picture display method and apparatus, and a storage medium and an electronic device. The picture display method comprises: displaying a first display picture under a first label, and displaying, in the first display picture, first guide information associated with a second label, wherein the second label is a variable label comprising a plurality of label options, and the first guide information is guide information corresponding to a target label in the plurality of label options; and in response to a trigger operation for the first guide information, switching the first display picture to a second display picture corresponding to the target label, wherein the second display picture after switching is a display picture associated with the first guide information.

## Description

This application claims the priority of Chinese patent application No.202211379834.9 filed on November 4, 2022, the disclosure of which is hereby incorporated in its entirety as a part of this application.

### TECHNICAL FIELD

Embodiments of the present disclosure relates to an image display method and apparatus, a storage medium and an electronic device.

### BACKGROUND

Information display is one of the more widely used functions in terminal devices such as smart phones, tablets and e-readers. With the rapid development of terminal devices, application programs on terminal devices tend to be complex and are no longer limited to a single framework.

Aiming at the complex frameworks of the application programs, there is a lack of effective guidance to users and the flexibility is poor.

### SUMMARY

The present disclosure provides an image display method and apparatus, a storage medium, and an electronic device, so as to guide the image display under a complex framework.

At a first aspect, embodiments of the present disclosure provide an image display method, including:
displaying a first display image under a first label, and displaying, in the first display image, first guide information associated with a second label, wherein the second label is a variable label including a plurality of label options, and the first guide information is guide information corresponding to a target label in the plurality of label options; and
switching the first display image to a second display image corresponding to the target label in response to a trigger operation on the first guide information, wherein the second display image after switching is a display image associated with the first guide information.

At a second aspect, embodiments of the present disclosure further provide an image display apparatus, which includes:
a first guide information display module configured to display a first display image under a first label, and display, in the first display image, first guide information associated with a second label, wherein the second label is a variable label including a plurality of label options, and the first guide information is guide information corresponding to a target label in the plurality of label options; and
an image switching module configured to switch the first display image to a second display image corresponding to the target label in response to a trigger operation on the first guide information, wherein the switched second display image is an associated display image of the first guide information.

At a third aspect, embodiments of the present disclosure provide an electronic device, which includes:
one or more processors; and
a storage apparatus configured to store one or more programs,
where the one or more programs, when executed by the one or more processors, causes the one or more processors to implement the image display method provided by any of the embodiments of the present disclosure.

At a third aspect, embodiments of the present disclosure provide a storage medium including computer-executable instructions, which, when executed by a computer processor, are used to perform the image display method provided by any of the embodiments of the present disclosure.

### BRIEF DESCRIPTION OF DRAWINGS

The foregoing and other features, advantages, and aspects of embodiments of the present disclosure become more apparent with reference to the following specific implementations and in conjunction with the accompanying drawings. Throughout the accompanying drawings, the same or similar reference numerals denote the same or similar elements. It should be understood that the accompanying drawings are schematic and that parts and elements are not necessarily drawn to scale.
Fig. 1 is a schematic diagram of a display interface in an embodiment of the present disclosure;
Fig. 2 is a flow diagram of an image display method provided by an embodiment of the present disclosure;
Fig. 3 is a schematic diagram showing first guide information in a first display image provided by an embodiment of the present disclosure;
Fig. 4 is a schematic diagram of first guide information in a second display image provided by an embodiment of the present disclosure;
Fig. 5 is a schematic diagram of first guide information in a second display image provided by an embodiment of the present disclosure;
Fig. 6 is a flow diagram of an image display method provided by an embodiment of the present disclosure;
Fig. 7 is a schematic diagram of a third display image provided by an embodiment of the present disclosure;
Fig. 8 is a schematic diagram of a second display image provided by an embodiment of the present disclosure;
Fig. 9 is a schematic diagram of a second display image provided by an embodiment of the present disclosure;
Fig. 10 is a schematic diagram of a second display image provided by an embodiment of the present disclosure;
Fig. 11 is a schematic diagram of a second display image provided by an embodiment of the present disclosure;
Fig. 12 is a structural schematic diagram of an image display apparatus provided by an embodiment of the present disclosure; and
Fig. 13 is a structural schematic diagram of an electronic device provided by an embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" used herein and the variations thereof are an open-ended inclusion, namely, "include but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of' mentioned in the present disclosure are illustrative and not restrictive, and those skilled in the art should understand that unless the context clearly indicates otherwise, the modifiers should be understood as "one or more".

The names of messages or information exchanged between apparatuses in the embodiments of the present disclosure are for illustrative purposes only, and are not intended to limit the scope of the messages or information.

It can be understood that before using the technical solutions disclosed in various embodiments of the present disclosure, users should be informed of the types, scope of use, use scenarios, etc. of personal information involved in the present disclosure in an appropriate way according to relevant laws and regulations and be authorized by the users.

For example, in response to receiving an active request from a user, prompt information is sent to the user to clearly prompt the user that an operation requested by the user to be performed will require acquisition and use of personal information of the user. Therefore, the user can independently choose whether to provide personal information to software or hardware such as an electronic device, an application program, a server or a storage medium that performs the operations of the technical solution of the present disclosure according to the prompt information.

As an optional but non-limiting implementation, in response to receiving the active request of the user, the prompt information may be sent to the user by, for example, a pop-up window, in which the prompt information can be presented in the form of text. In addition, the pop-up window can also carry a selection control for the user to choose "agree" or "disagree" to provide personal information to the electronic device.

It can be understood that the above process of notifying and acquiring user authorization is only schematic, and does not limit the implementation of the present disclosure, and other ways meeting relevant laws and regulations can also be applied to the implementation of the present disclosure.

It can be understood that the data referred to in this technical solution (including but not limited to the data itself, the acquisition or use of the data) should comply with the requirements of the applicable laws and regulations and related regulations.

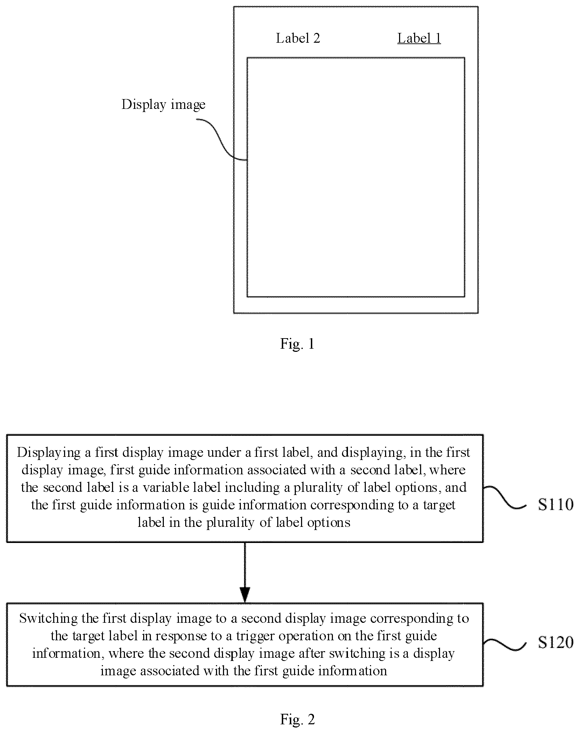

A client is communicatively connected with a video server. The client sends a data request to the server, receives data pushed by the server, and displays it. The data displayed here includes but is not limited to images, videos, etc. A display interface of the client includes at least two data channels, and different data channels can be switched. Each data channel corresponds to a label, which is displayed in the display interface, and the data channels can be switched according to a click operation of the user on the label. Exemplarily, with reference to Fig. 1, Fig. 1 is a schematic diagram of the display interface in an embodiment of the present disclosure. The display interface includes a label display area for displaying at least two labels, and the label display area can be set at a top of the display interface. It can be understood that labels set in different application programs can be different, and the corresponding labels are set according to the set data channels. Here, when the data channel is switched according to a label trigger operation, display data corresponding to the switched label can be sent to the server and displayed in the display interface of the client to form a display image. A selected label is displayed differently from an unselected label. Exemplarily, a color of the selected label is different from that of the unselected label, or the selected label is set with a distinctive mark, which can be an underline, etc., without limitation. In Fig. 1, the first label is the selected label, the second label is the unselected label, and accordingly, a current display image is a first display image under the first label. It can be understood that a number of labels displayed in the label display area can be multiple. Exemplarily, the labels displayed in the label display area include, but are not limited to, recommendations, concerns, trendings, etc.

In this embodiment, the labels in the label display area may include variable labels and/or fixed labels. The fixed label refers to a label whose label content does not change, and the variable label refers to a label whose label content can be changed according to a setting operation. The variable label may include a plurality of label options, and the user can set any of the plurality of label options as a label content of the variable label as required, thus improving the flexibility of label setting and meeting different needs of different users.

In the embodiment of the present disclosure, the first label may be a fixed label and the second label may be a variable label. The variable label includes a plurality of label options, and, in response to a setting operation on any label option of the plurality of label options, the second label being displayed is updated to the label option being selected. Exemplarily, the label options in the variable label include, but are not limited to, trendings, learning, and the like. In a label setting mode, a plurality of label options are displayed, and the label option being displayed is updated to the label option being selected according to the setting operation, that is, the label option being selected is displayed in a display position of the second label. Optionally, the plurality of label options can be preset or acquired from the server. The plurality of label options here can be updated according to a configuration of the server.

In the embodiment described above, only a part of the labels can be displayed in the label display area, and there is a problem that the label options cannot be intuitively displayed in the label display area, that is, the label options cannot be intuitively understood by the user, and the user needs to click the variable label to enter the display image of the variable label and view other label options in the display image of the variable label, which is complicated in operation and inconvenient for the user to enter the display image corresponding to the other label options. Further, when new label options are added to the variable label, there is a lack of guidance for adding newly added label options. As for a new display content of any of label options in the variable label, there is also a lack of guidance for users.

In view of the technical problems described above, an embodiment of the present disclosure provides an image display method, with reference to Fig. 2. Fig. 2 is a flow diagram of the image display method provided by the embodiment of the present disclosure. The embodiment of the present disclosure is suitable for a situation that in an image display process under one label, guide information corresponding to another label is displayed in the display image to guide an operating user to switch to another label for image display. The method can be executed by an image display apparatus provided by an embodiment of the present disclosure, which image display apparatus can be implemented in the form of software and/or hardware, or alternatively, by an electronic device, which can be a mobile terminal, a PC terminal or a server. As shown in Fig. 2, the image display method includes:
S110: displaying a first display image under a first label, and displaying, in the first display image, first guide information associated with a second label, where the second label is a variable label including a plurality of label options, and the first guide information is guide information corresponding to a target label in the plurality of label options.
S120: switching the first display image to a second display image corresponding to the target label in response to a trigger operation on the first guide information, where the second display image after switching is a display image associated with the first guide information.

In response to a preset trigger operation, the first display image under the first label is displayed, where the preset trigger operation can be any one of: a startup operation on an application program, a click operation on the first label, and an update operation on the display image under the first label. In some embodiments, the first label may be a default label after the application program is started, that is, after the application program is started, the first label is entered and the first display image under the first label is displayed. In a running process of the application program, the user can switch from other labels to the first label, for example, by a preset switching gesture or by clicking the first label, and the first display image under the first label is displayed. In some embodiments, in a display process of the first display image under the first label, the first display image can be updated in a preset way; exemplarily, the first display image can be updated by swiping up and down or swiping left and right. It can be understood that the image content of the first display image displayed in any of the above cases may be different.

The first label can be one or more labels displayed in the label display area, optionally, the first label can be preset, and a type and quantity of the first labels can be set according to guide requirements. Exemplarily, the first label may be a recommendation label.

When the current display image is the first display image under the first label, the first guide information associated with the second label is acquired, and the first guide information associated with the second label is displayed in the first display image, and the first guide information is used for displaying associated information of a browsable image under the second label to the user and guiding a flow for the second label.

An information content of the first guide information here can be sent by the server. When the client detects the first display image under the first label, it sends a guide information request to the server, and the server determines the information content of the first guide information and sends it to the client. The client receives the information content, generates first guide information from this information content and renders it in the first display image.

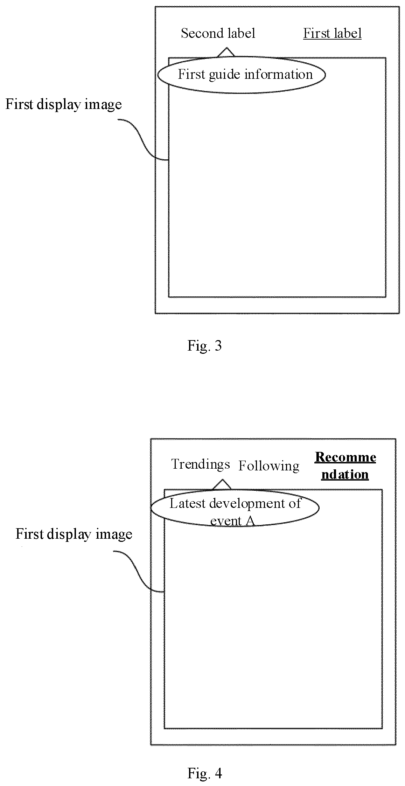

In some embodiments, the first guide information is displayed in the form of a bubble or a floating window. Exemplarily, with reference to Fig. 3, Fig. 3 is a schematic diagram showing first guide information in a first display image provided by an embodiment of the present disclosure. Illustratively, a bubble model is called, a size of the bubble model is adjusted according to a data amount of the first guide information, the first guide information is added to the bubble model to obtain the first guide information in the form of bubble, and the first guide information in the form of bubble is rendered in the preset area of the first display image. Exemplarily, a blank floating window is called, the first guide information is added to the blank floating window, and the size of the floating window is adaptively adjusted to obtain the first guide information in the form of the floating window, and the first guide information in the form of the floating window is rendered in the preset area of the first display image. It can be understood that the display form of the first guide information is not limited to bubble and floating window, but also can be other forms such as a pop-up window, which can be set as required.

Optionally, the preset area for displaying the first guide information can be an associated position of the second label, for example, it can be below, above, on the left or right of the position where the second label is located. The preset area can be a preset fixed position, such as shown in Fig. 3, or a free area determined according to a real-time change of the first display image, so as to avoid blocking important information in the displayed image. The free area can be a blank area or a pure color area, etc. It should be noted that the free area is located in the preset area associated with the second label. By setting the first guide information in the preset area associated with the second label, the effect of guiding the user to the second label is realized, so that the user can know the second label better.

In this embodiment, the first guide information is associated with resources under the second label in advance, and the associated resources are an associated display image of the first guide information. When the first guide information is triggered, the first display image under the first label can be switched to the second display image under the second label based on a relationship between the first guide information and the resources under the second label, and the second display image is an associated display image of the first guide information.

The trigger operation on the first guide information includes, but is not limited to, a click operation on the first guide information, a double-click operation and a preset sliding trajectory.

Therefore, the trigger operation on the first guide information is detected, the display interface corresponding to the data channel corresponding to the second label is switched, the associated display image of the first guide information is called, and the associated display image of the first guide information is rendered in the display interface corresponding to the second label, so that rapid switching of the display image is realized without complicated operation processes such as a label switching operation and an image search operation, the switching efficiency of the display image is improved, and a switching mode of the display image is added. Here, when the first display image is switched to the second display image, the display form of the first label is switched to a normal form, and the display form of the second label is switched to a distinctive display form, so as to display the switching between labels. For example, a brightness of the first label is reduced, an underline of the first label is cancelled, a brightness of the second label is increased, and an underline is set for the second label.

On the basis of the embodiment described above, the information content in the first guide information is not a fixed content, but an associated information content of the second display image. Optionally, the first guide information includes event overview information corresponding to the second display image, and by displaying the event overview information, it is convenient for the user to quickly understand a core content of the second display image, so as to determine whether to switch the display image.

It should be noted that the second label is a variable label, and the label content displayed by location processing of the second label can be changed, and the label contents set by different clients are different. The first guide information is guide information corresponding to one of a plurality of label options under the second label, that is, the guide information corresponding to the target label. The target label can be any one of a plurality of label options, or the target label can be a fixed one of a plurality of label options. In some embodiments, the target label can be a preset label option of a plurality of label options, or it can be a newly added label option among a plurality of label options.

Due to the variability of the label content of the second label, a display state of the second label may or may not correspond to the target label corresponding to the first guide information. Especially when the display state of the second label does not correspond to the target label corresponding to the first guide information, the event overview information in the first guide information and the label content of the second label are easy to mislead users. For example, the currently displayed label content of the second label is a city A, and the event overview information in the first guide information is event information under the target label "trending", which is easy to mislead users.

In order to solve the above problems, different first guide information is set according to whether the current display state of the second label is the target label. That is, when the current display state of the second label is the display target label, that is, the current display state of the second label corresponds to the target label corresponding to the first guide information, the first guide information includes the event overview information corresponding to the second display image. When the current display state of the second label is displaying a non-target label included in the second label, that is, the current display state of the second label does not correspond to the target label corresponding to the first guide information, the first guide information includes the target label information and the event overview information corresponding to the second display image. By setting the target label information in the first guide information, the target label corresponding to the second display image corresponding to the event overview information is indicated, so as to avoid misleading users.

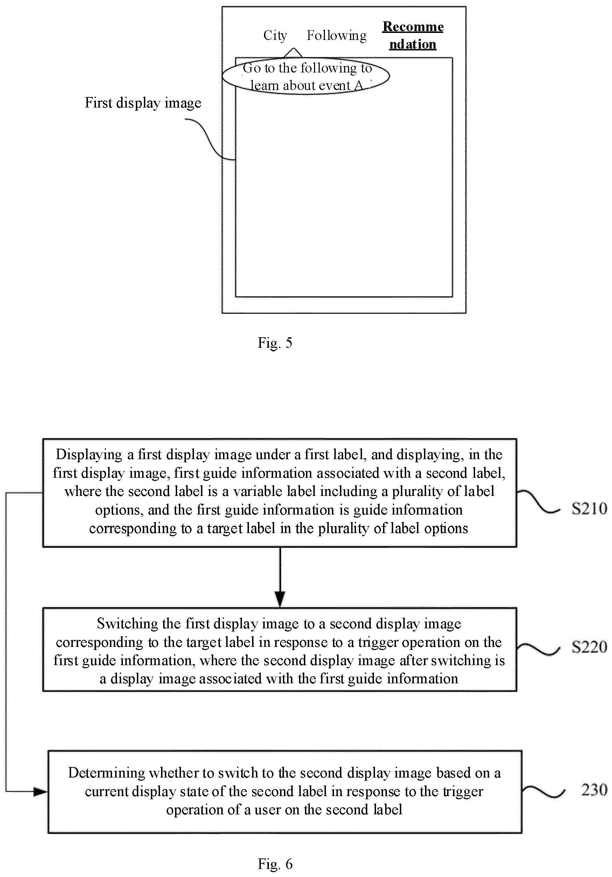

Exemplarily, with reference to Fig. 4 and Fig. 5, Fig. 4 and Fig. 5 are schematic diagrams of first guide information in a second display image provided by an embodiment of the present disclosure. In FIGS. 4 and 5, the first label is a recommendation label, the second label in Fig. 4 is a trending label, and the second label in Fig. 5 is a city label. The target label corresponding to the first guide information is a trending label. Correspondingly, in Fig. 4, the current display state of the second label corresponds to the target label corresponding to the first guide information, and accordingly, the first guide information only includes event overview information. In Fig. 5, the current display state of the second label does not correspond to the target label corresponding to the first guide information, and accordingly, the first guide information includes event overview information and target label information, that is, trending label information. In Fig. 5, the first guide information can not only guide the user to understand that an associated image of an event A can be browsed in the trending label, but also guide the trending label to set the "city" label, so as to facilitate the user to understand the framework structure of the application program. It can be understood that the trending label as the target label is only an example, and in other embodiments, other target labels can be set as needed.

The first guide information is displayed in the first display image, and the display of the first guide information or the second guide information is cancelled if a display duration of the first guide information meets a duration threshold and the first guide information is not triggered. The display duration threshold of the first guide information in the first display image is preset, and if the first guide information is not triggered after the display duration threshold, it indicates that the user does not pay attention to events in the first guide information, and the display of the first guide information is cancelled to avoid the interference of the first guide information on the first display image.

Optionally, when the first guide information is not triggered, the information content in the first guide information is marked, and when the event overview information is received again, if the event overview information received again is the same as the information content marked above, no guide information will be formed, so as to avoid interference to users. If the event overview information received again is different from the information content marked above, new first guide information is formed and displayed.

On the basis of the embodiment described above, the event overview information in the first guide information may be determined and pushed by the server. Optionally, a method for determining the event overview information may include: determining an event attention degree of each event in a resource under the target label, determining a target event based on the event attention degree, and extracting event overview information of the target event.

Each label option under the variable label corresponds to a large number of resources respectively, which increase with time. For the large number of resources under the target label, attention data of each resource is determined, where the attention data includes but is not limited to page views, comments, forwarding, favorites, etc., and resource attention degree of the resource is determined based on the attention data; exemplarily, the above attention data can be calculated and processed based on preset calculation rules, for example, the preset calculation rules include but are not limited to weighted calculation rules, etc. Meanwhile, for a same event, there may be a plurality of associated resources, and accordingly, based on resource attention degrees of the plurality of associated resources of the same event, the event attention degree is determined. The event attention degree can be a sum of the resource attention degrees of the plurality of resources, or an average value, etc., and preset rules can be called to determine the event attention degree.

Optionally, for any newly added resource, the event corresponding to the resource can be extracted, such as extracting copy information or content information of the resource, and extracting the event corresponding to the resource based on the text information or the content information. Exemplarily, keywords can be extracted from extracted text information (such as text information converted from the above-mentioned copy information or audio information in a video, etc.) to obtain the event corresponding to the resource; or, the above-mentioned copy information or content information can be inputted into an event recognition model to obtain the event corresponding to the resource. It is judged whether the determined event is an existing event, and if so, the resource is associated with the existing event; if not, a newly added event is created and associated with the resource. Accordingly, for each event, the event attention degree is determined based on the resource attention degrees of the plurality of resources associated with the event. Optionally, the event attention degree can be updated according to a preset time interval to improve the real-time performance of the event attention degree.

The event attention degrees of the events are ranked, and the target event can be determined based on the ranking, which can be the event with the highest event attention degree. The event overview information of the target event is extracted as the information content in the first guide information.

Optionally, when a concerned event is determined, the concerned event has a new progress over time, and at a time node where the new progress is determined, the event overview information is generated, which includes at least one of event information and new progress information. The server sends the event overview information to the client on the first display image, and the client forms the first guide information based on the received event overview information and displays it on the first display image.

In some embodiments, the first guide information in the first display image can be multiple, that is, the first guide information can be ranked according to the event attention degree, multiple target events are determined, and the event overview information corresponding to the multiple target events will be determined to form multiple first guide information. Here, the number of the first guide information can be set according to the setting operation of the user.

It can be understood that the information content of the first guide information here is only associated with the event attention degree of the resource under the target label, and is not necessarily related to the image content in the first display image.

Optionally, a method for determining the event overview information may include: determining a content event of the first display image, and extracting event overview information of the content event if the content event has a corresponding relationship with the target label. Here, the way to determine the content event corresponding to the first display image is not described in detail. On the basis of determining the event attention degree of each event under the target label, the above events are judged, for example, the event whose event attention degree is greater than an attention degree threshold is determined as the concerned event, or the event whose event attention degree is ranked within a preset ranking range is determined as the concerned event. A set of concerned events is maintained based on the above judgment result, for example, in the form of a table, and the set of concerned events is updated in real time or according to time intervals.

The content event of the first display image is matched in the set of concerned events, and if the matching is successful, it indicates that the content event has a corresponding relationship with the target label, the event overview information of the content event is extracted, and first guide information is formed based on the event overview information; if the matching fails, it is determined that there is no corresponding relationship between the content event and the target label, it is not necessary to extract the event overview information, and it is not necessary to form the first guide information until the image content of the first display image is updated, and the above processes are re-executed to determine whether the first guide information is generated, and so on. Here, the first guide information is associated with the first display image and the second display image at the same time. The user can quickly enter the second display image by triggering the first guide information, and browse more comprehensive event resources. It can be understood that the content event can be an associated event, or other common user contents.

In the technical solution provided by this embodiment, by displaying the first guide information corresponding to the target label under the variable label in a display process of the first display image under the first label, the first display image is switched to the associated display image of the first guide information under the target label when the user triggers the first guide information through the trigger operation. Since the variable label includes a plurality of label options, by displaying the guide information corresponding to the target label of the plurality of label options in the first display image, it is convenient to guide the user to understand the target label and the browsable resources under the target label, thereby guiding a flow for the target label. In a case where a framework structure of the application program is complex, the user is provided with a way to understand the frame structure and more resources, an operation process of switching display images between different labels is simplified, and a convenience is provided for the user to switch display images.

Fig. 6 is a flow diagram of an image display method provided by an embodiment of the present disclosure. Optionally, the first guide information is displayed in the preset area of the first display image, the preset area further includes a second label, and the image display method further includes: determining whether to switch to the second display image based on a current display state of the second label in response to the trigger operation of a user on the second label. With reference to Fig. 6, the method specifically includes:
S210: displaying a first display image under a first label, and displaying, in the first display image, first guide information associated with a second label, where the second label is a variable label including a plurality of label options, and the first guide information is guide information corresponding to a target label in the plurality of label options.
S220: switching the first display image to a second display image corresponding to the target label in response to a trigger operation on the first guide information, where the second display image after switching is a display image associated with the first guide information.
S230: determining whether to switch to the second display image based on a current display state of the second label in response to the trigger operation of a user on the second label.

In this embodiment, besides the operation mode of triggering the first guide information, the second label can also be triggered to switch the display image. Here, the trigger operation on the second label includes, but is not limited to, a click operation on the second label, a label switching gesture operation, and the like.

Here, since the second label is a variable label, the current display state of the second label includes displaying the target label and displaying a non-target label included in the second label. With reference to, with reference to FIGS. 4 and 5, in this embodiment, when the trigger operation on the second label is detected, the first display image is switched, and the switched display image is based on the current display state of the second label.

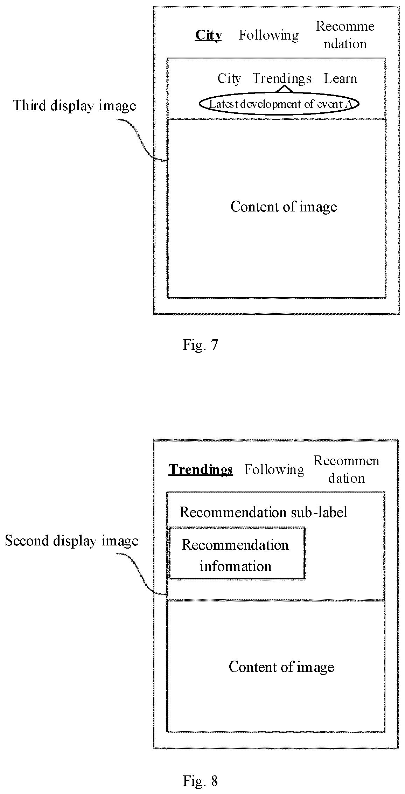

If the current display state of the second label is displaying the target label, that is, the target label is an explicit label of the second label, the first display image is switched to the second display image. With reference to Fig. 4, the target label is a trending label, and the trending label is displayed at a position of the second label; and when the trending label is triggered, the first display image is switched to the second display image. If the current display state of the second label is displaying the non-target label included in the second label, that is, the target label is a hidden label of the second label, the first display image is switched to the third display image corresponding to the non-target label, as shown in Fig. 5, the target label is a trending label, and the city label displayed at the position of the second label is a non-target label. The first display image is switched to the third display image, with reference to Fig. 7. Fig. 7 is a schematic diagram of a third display image provided by an embodiment of the present disclosure.

The second guide information is displayed in the third display image, and the second guide information is guide information corresponding to the target label. The second guide information can be displayed in the form of a bubble or a floating window, which will not be described here. The second guide information includes the event overview information corresponding to the second display image, where the event overview information in the second guide information is the same as the event overview information in the first guide information. It should be noted that the second guide information does not need to include the target label information.

Since the current display state of the second label is displaying the non-target label, that is, the image does not enter the second display image corresponding to the target label, but is switched to the third display image corresponding to the non-target label. The second guide information is continuously displayed in the third display image, which is convenient for guiding the target label in the third display image, and is convenient for the user to further understand the target label.

On the basis of the embodiment described above, in a display process of the third display image, the third display image is switched to the second display image corresponding to the target label in response to the trigger operation on the second guide information. The second guide information is generated and rendered in the same way as the first guide information, and the second guide information is associated with the resources of the second display image; when the trigger operation of the user on the second guide information is detected, the resources of the second display image are called based on the association relationship between the second guide information and the resources of the second display image, and the second display image is displayed. Optionally, the association of the first guide information and the second guide information with the resource of the second display image can be implemented by the association of resource storage addresses of the first guide information and the second guide information.

In some embodiments, the second guide information may be a preset area in the third display image. The third display image includes a display area and an image display area for displaying a plurality of label options, the plurality of label options are displayed in the display area, and each label option can be triggered to enter the display image corresponding to each label option. The image display area is used for displaying an image content of the triggered non-target label. The second guide information is displayed in the associated position of the target label in the display area, with reference to Fig. 7. It should be noted that the label options in Fig. 7 are only examples, and in other embodiments, they are not limited to the above-mentioned listed label options.

When the trigger operation on the target label in the display area is detected, the third display image is switched to the second display image corresponding to the target label in response to the trigger operation on the target label. The second display image is an associated display image of the second guide information.

According to the technical solution of the embodiment of the present disclosure, when the second label and the first guide information corresponding to the second label are displayed in the first display image, two different switching forms of the display images are provided. The switching of the first display image can be implemented by the trigger operation on the first guide information, and the switching of the first display image can be implemented by the trigger operation on the second label. Meanwhile, due to the variability of the second label, according to the current display state of the second label, that is, the label content displayed at the position of the second label, the switched display image is determined when the second label is triggered. When the current display state of the second label is displaying the non-target label among the variable labels, the switched display image is the third display image of the non-target label, and at the same time, the second guide information is displayed in the third display image, which is used for further guiding the resources to be displayed of the target label, so that the user can understand the target label and switch to the second display image corresponding to the target label. A path guidance is provided for users to understand the structure framework of the application program and the resources in the target label.

On the basis of the embodiment described above, after switching to the second display image, the image content is displayed. Optionally, a recommendation sub-label in the target label and recommendation information corresponding to the recommendation sub-label are displayed in the second display image, and/or an associated event sub-label of the second display image and event information corresponding to the associated event sub-label are displayed in the second display image, where a label content in the associated event sub-label is associated with an information content in the first guide information. With reference to Fig. 8 to Fig. 11, Fig. 8 to Fig. 11 are schematic diagrams of a second display image provided by an embodiment of the present disclosure.

The recommendation information corresponding to the recommendation sub-label is information pushed to the client based on the existing resources under the target label, and the push information can be sent by the server, where the push information can be determined by ranking the resource attention degrees of the resources under the target label, determining push resources according to the above ranking, and extracting the push information corresponding to the push resources. The push sub-label can be a push list label, and accordingly, the pushed information can be ranked according to the resource attention degrees. It can be understood that the push information corresponding to the push sub-label is not necessarily related to the event information corresponding to the second display image. For example, the push information may or may not include the associated information of the image content in the second display image. Exemplarily, see Fig. 8.

In a display process of the second display image, a display content of the second display image is updated in response to a trigger operation on any of the recommendation information, where the display content after updating is an associated content of the triggered recommendation information. A trigger operation on the recommendation information is detected, a data request is generated based on the recommendation information, resources corresponding to the recommendation information are requested from the server, and the image content of the second display image is updated based on the requested resources.

The label content in the associated event sub-label is associated with the information content in the first guide information, and specifically, it can be associated with or the same as the event overview information in the first guide information and the second guide information. Accordingly, the event information corresponding to the associated event sub-label is associated with the event overview information in the first guide information and the second guide information. Optionally, the event information corresponding to the associated event sub-label may be event detailed information corresponding to the above event overview information, and specifically, the event detailed information may be the event context information that develops over time. The event information can be updated according to a latest progress of the event. By displaying the event context information, it is convenient for the user to quickly understand the event development status.

In some embodiments, an event data packet can be maintained in the server for storing the event context information and the corresponding timestamp. For a newly added resource of the event, key information of the newly-added resource can be extracted, and whether the newly added resource is a time-newly-progressed resource can be judged based on the key information; if so, latest progress information can be added to the event data packet based on the key information. Meanwhile, the updated event context information is sent to each client based on the updated event data packet. Accordingly, the client displays the updated event context information.

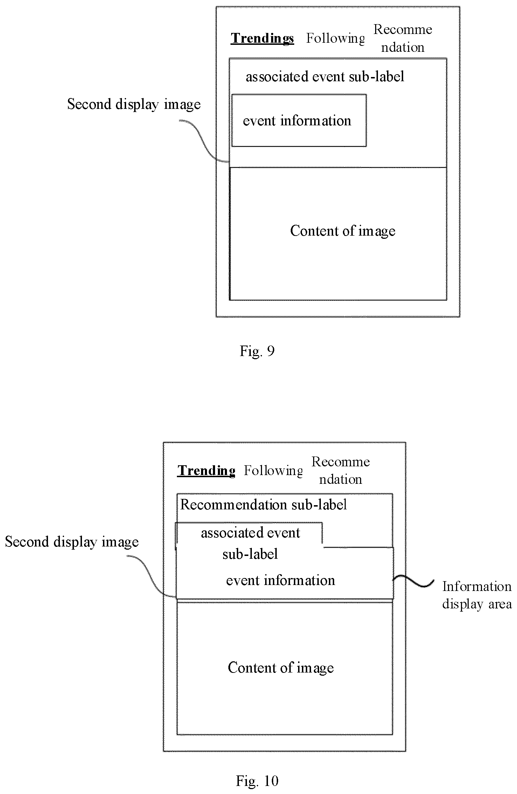

Optionally, the event information corresponding to the associated event sub-label can be the event recommendation information of associated events corresponding to the first guide information and the second guide information under the target label, that is, media content resources of key events can be determined in the resources corresponding to the associated events under the target label, and associated information of the media content resources can be determined as the event recommendation information under the associated event sub-label. By displaying multiple event recommendation information corresponding to the associated events under the associated event sub-label, it is convenient for the user to quickly understand the associated events by browsing the image content corresponding to each event recommendation information. Exemplarily, see Fig. 9.

Accordingly, in the display process of the second display image, a display content of the second display image is updated in response to a trigger operation on the event information, where the display content after updating is an associated content of the triggered event information. There is no need for the user to search and query manually. By clicking the above event information, the corresponding image content can be displayed in the second display image, so that the query efficiency of image resources is improved.

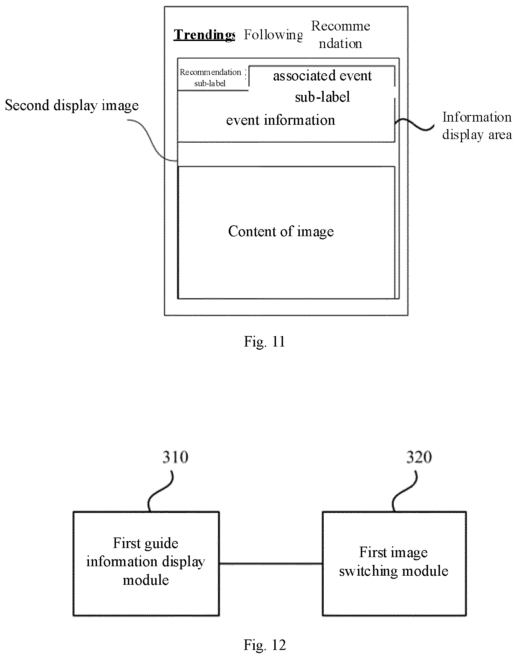

On the basis of the embodiment described above, the second display image can simultaneously display the associated event sub-label, the event information corresponding to the associated event sub-label, the recommendation sub-label and the recommendation information corresponding to the recommendation sub-label. The associated event sub-label and the recommendation sub-label can be arranged horizontally or vertically. With reference to FIGS. 10 and 11, optionally, the information corresponding to one of the associated event sub-labels and the recommendation sub-labels can be hidden. For example, according to a selection operation of the user, the selected sub-label can be determined, information corresponding to the selected sub-label can be displayed, and information corresponding to the unselected sub-label can be hidden.

Optionally, the second display image further includes an information display area; the information display area is used for displaying the information corresponding to the selected sub-label.
the displaying, in the second display image, a recommendation sub-label in the target label and recommendation information corresponding to the recommendation sub-label, or displaying, in the second display image, an associated event sub-label of the second display image and event information corresponding to the associated event sub-label includes: displaying, in the information display area, the recommendation information or the event information in response to a trigger operation on the recommendation sub-label or the associated event sub-label, where the selected label display area of the recommendation sub-label or the associated event sub-label is communicated with the information display area. Exemplarily, with reference to Fig. 11, in Fig. 11, according to the trigger operation of the user on the associated event sub-label, the recommendation information corresponding to the recommendation sub-label is hidden, and the event information corresponding to the associated event sub-label is displayed in the information display area. Both the display of the information corresponding to the two sub-labels and the image area occupied by the information display are taken into account.

By connecting the information display area with the label display area of the selected sub-label, it is convenient for the user to distinguish the selected sub-label and the unselected sub-label.

According to the technical solution provided by this embodiment, by displaying the information of different sub-labels in the second display image, it is convenient to quickly query and browse the resources under the target label through the displayed information, thus simplifying a resource query process.

Fig. 12 is a structural schematic diagram of an image display apparatus provided by an embodiment of the present disclosure. As shown in Fig. 12, the image display apparatus includes: a first guide information display module 310 and a first image switching module 320.

The first guide information display module 310 is configured to display a first display image under a first label, and display, in the first display image, first guide information associated with a second label, where the second label is a variable label including a plurality of label options, and the first guide information is guide information corresponding to a target label in the plurality of label options; and

the first image switching module 320 is configured to switch the first display image to a second display image corresponding to the target label in response to a trigger operation on the first guide information, where the switched second display image is an associated display image of the first guide information.

In the technical solution provided by this embodiment, by displaying the first guide information corresponding to the target label under the variable label in a display process of the first display image under the first label, the first display image is switched to the associated display image of the first guide information under the target label when the user triggers the first guide information through the trigger operation. Since the variable label includes a plurality of label options, by displaying the guide information corresponding to the target label of the plurality of label options in the first display image, it is convenient to guide the user to understand the target label and the browsable resources under the target label, thereby guiding a flow for the target label. In a case where a framework structure of the application program is complex, the user is provided with a way to understand the frame structure and more resources, an operation process of switching display images between different labels is simplified, and a convenience is provided for the user to switch display images.

On the basis of the embodiment described above, optionally, the first guide information is displayed in a preset area of the first display image, and the preset area further includes a second label.

The apparatus further includes:
a second label trigger processing module configured to determine whether to switch to the second display image based on a current display state of the second label in response to the trigger operation of a user on the second label.

Optionally, the second label trigger processing module is configured to switch the first display image to the second display image if a current display state of the second label is displaying the target label.

Optionally, the second label trigger processing module is configured to switch the first display image to a third display image corresponding to a non-target label and display second guide information in the third display image if the current display state of the second label is displaying the non-target label included in the second label, where the second guide information is guide information corresponding to the target label.

On the basis of the embodiment described above, optionally, the apparatus further includes:
a second image switching module configured to switch the third display image to the second display image corresponding to the target label in response to a trigger operation on the second guide information.

On the basis of the embodiment described above, optionally, the third display image further includes a display area displaying the plurality of label options, and the second guide information is displayed in an associated position of the target label in the display area; and
optionally, the apparatus further includes: a third image switching module configured to switch the third display image to the second display image corresponding to the target label in response to a trigger operation on the target label in the display area.

On the basis of the embodiment described above, optionally, when the current display state of the second label is displaying the non-target label included in the second label, the first guide information includes target label information and event overview information corresponding to the second display image; and
when the current display state of the second label is displaying the target label, the first guide information includes event overview information corresponding to the second display image.

On the basis of the embodiment described above, optionally, the second guide information includes event overview information corresponding to the second display image.

On the basis of the embodiment described above, optionally, the apparatus further includes: an event overview information determination module configured to
determine an event attention degree of each event in a resource under the target label, determine a target event based on the event attention degree, and extract event overview information of the target event; or, determine a content event of the first display image, and extract event overview information of the content event if the content event has a corresponding relationship with the target label.

On the basis of the embodiment described above, optionally, the apparatus further includes: an information display module configured to display, in the second display image, a recommendation sub-label in the target label and recommendation information corresponding to the recommendation sub-label, and/or display, in the second display image, an associated event sub-label of the second display image and event information corresponding to the associated event sub-label, where a label content in the associated event sub-label is associated with an information content in the first guide information.

Optionally, the second display image further includes an information display area; and
an information display module configured to display, in the information display area, the recommendation information or the event information in response to a trigger operation on the recommendation sub-label or the associated event sub-label, where the selected label display area of the recommendation sub-label or the associated event sub-label is communicated with the information display area.

Optionally, the apparatus further includes:
an image updating module configured to update a display content of the second display image in response to a trigger operation for any of the recommendation information, where the display content after updating is an associated content of the triggered recommendation information; or, update a display content of the second display image in response to a trigger operation on the event information, where the display content after updating is an associated content of the triggered event information.

On the basis of the embodiment described above, optionally, the first guide information or the second guide information is displayed in the form of a bubble or a floating window.

On the basis of the embodiment described above, optionally, the apparatus further includes:
a display judging module configured to cancel the display of the first guide information or the second guide information if a display duration of the first guide information or the second guide information meets a duration threshold and the first guide information or the second guide information is not triggered.

On the basis of the embodiment described above, optionally, the label updating module is configured to, in response to a setting operation on any label option of the plurality of label options, update the second label being displayed to thelabel option being selected.

The image display apparatus provided by the embodiment of the present disclosure can execute the image display method provided by any embodiment of the present disclosure, and has corresponding functional modules for executing the method and beneficial effects.

It is worth noting that the various units and modules included in the above apparatus are only divided according to functional logics, but not limited thereto, as long as the corresponding functions can be implemented; in addition, the specific names of the functional units are only for the convenience of distinguishing between each other, and are not used to limit the protection scope of the embodiments of the present disclosure.

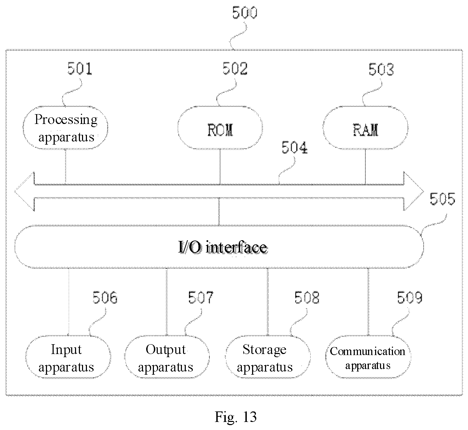

Fig. 13 is a structural schematic diagram of an electronic device provided by an embodiment of the present disclosure. Reference is now made to Fig. 13, which shows a structural schematic diagram of an electronic device (e.g., a terminal device or a server in Fig. 13) 500 suitable for implementing the embodiment of the present disclosure. The terminal devices in the embodiments of the present disclosure may include, but not limited to, mobile terminals such as a mobile phone, a notebook computer, a digital broadcast receiver, a personal digital assistant (PDA), a tablet computer (PAD), a portable multimedia player (PMP), a vehicle-mounted terminal (for example, a vehicle-mounted navigation terminal) and the like, and fixed terminals such as a digital TV, a desktop computer and the like. The electronic device shown in Fig. 13 is only an example, and should not bring any limitation to the functions and application scope of the embodiments of the present disclosure.

As shown in Fig. 13, the electronic device 500 may include a processing apparatus (for example, a central processing unit, a graphics processing unit, etc.) 501, which may perform various appropriate actions and processes according to programs stored in a read-only memory (ROM) 502 or programs loaded from a storage apparatus 508 into a random access memory (RAM) 503. In the RAM 503, various programs and data required for operations of the electronic device 500 are also stored. The processing apparatus 501, the ROM 502 and the RAM 503 are connected to each other through a bus 504. An editing/output (I/O) interface 505 is also connected to the bus 504.

Generally, the following apparatuses may be connected to the I/O interface 505: an input apparatus 506 including, for example, a touch screen, a touch pad, a keyboard, a mouse, a camera, a microphone, an accelerometer, a gyroscope, etc.; an output apparatus 507 including, for example, a liquid crystal display (LCD), a speaker, a vibrator, etc.; a storage apparatus 508 including, for example, a magnetic tape, a hard disk, etc.; and a communication apparatus 509. The communication apparatus 509 may allow the electronic device 500 to perform wireless or wired communication with other devices to exchange data. While the electronic device 500 with various apparatuses is shown in the Fig. 13, it should be understood that it is not required to implement or have all the apparatuses shown. More or fewer apparatuses may alternatively be implemented or provided.

In particular, according to the embodiments of the present disclosure, processes described above with reference to the flowchart may be implemented as a computer software program. For example, an embodiment of the present disclosure includes a computer program product, which includes a computer program carried on a non-transitory computer-readable medium, the computer program including program codes for performing the method shown in the flowchart. In such an embodiment, the computer program may be downloaded and installed from a network through the communication apparatus 509, or installed from the storage apparatus 508, or installed from the ROM 502. When the computer program is executed by the processing apparatus 501, the above functions defined in the method of the embodiment of the present disclosure are performed.

The names of messages or information exchanged among a plurality of devices in the embodiment of the present disclosure are only used for illustrative purposes, and are not used to limit the scope of these messages or information.

The electronic device provided by the embodiments of the present disclosure belongs to the same technical concept as the image display method provided by the above embodiment, and the technical details not described in detail in this embodiment can be found in the above embodiment, and this embodiment has the same beneficial effects as the above embodiment.

An embodiment of the present disclosure provides a computer storage medium, on which a computer program is stored, which, when executed by a processor, realizes the image display method provided in the above embodiment.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium stores one or more programs that, when executed by the electronic device, cause the electronic device to:

The above computer-readable medium carries one or more programs that, when executed by the electronic device, cause the electronic device to: perform, in response to a shooting trigger operation, image capture by using a target shooting apparatus, to obtain a first image, and display the first image in a shooting interface; obtain an uploaded image as a second image in response to an uploading trigger operation, display the second image in the shooting interface, and determine at least one third image from the second image; and display, in response to a special effect trigger operation, a special effect image corresponding to the first image and the third image.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two Internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

At least one embodiment of the present disclosure provides an image display method, which includes:
displaying a first display image under a first label, and displaying, in the first display image, first guide information associated with a second label, wherein the second label is a variable label including a plurality of label options, and the first guide information is guide information corresponding to a target label in the plurality of label options; and switching the first display image to a second display image corresponding to the target label in response to a trigger operation on the first guide information, wherein the second display image after switching is a display image associated with the first guide information.

The image display method provided by at least one embodiment of the present disclosure further includes:
the first guide information is displayed in a preset area of the first display image, the preset area further includes the second label, and the method further includes: determining whether to switch to the second display image based on a current display state of the second label in response to a trigger operation of a user on the second label.

The image display method provided by at least one embodiment of the present disclosure further includes:
the determining whether to switch to the second display image based on a current display state of the second label includes: if a current display state of the second label is displaying the target label, switching the first display image to the second display image.

The image display method provided by at least one embodiment of the present disclosure further includes:
the determining whether to switch to the second display image based on a current display state of the second label includes: if the current display state of the second label is displaying a non-target label included in the second label, switching the first display image to a third display image corresponding to the non-target label and displaying second guide information in the third display image, wherein the second guide information is guide information corresponding to the target label.

The image display method provided by at least one embodiment of the present disclosure further includes:
switching the third display image to the second display image corresponding to the target label in response to a trigger operation on the second guide information.

The image display method provided by at least one embodiment of the present disclosure further includes:
the third display image further includes a display area displaying the plurality of label options, and the second guide information is displayed in an associated position of the target label in the display area; and
the method further includes: switching the third display image to the second display image corresponding to the target label in response to a trigger operation on the target label in the display area.

The image display method provided by at least one embodiment of the present disclosure further includes:
when the current display state of the second label is displaying a non-target label included in the second label, the first guide information includes target label information and event overview information corresponding to the second display image; and when the current display state of the second label is displaying the target label, the first guide information includes event overview information corresponding to the second display image.

The image display method provided by at least one embodiment of the present disclosure further includes:
the second guide information includes event overview information corresponding to the second display image.

The image display method provided by at least one embodiment of the present disclosure further includes:
a method of determining the event overview information includes: determining an event attention degree of each event in a resource under the target label, determining a target event based on the event attention degree, and extracting event overview information of the target event; or, determining a content event of the first display image, and extracting event overview information of the content event if the content event has a corresponding relationship with the target label.

The image display method provided by at least one embodiment of the present disclosure further includes:
displaying, in the second display image, a recommendation sub-label in the target label and recommendation information corresponding to the recommendation sub-label, and/or displaying, in the second display image, an associated event sub-label of the second display image and event information corresponding to the associated event sub-label, wherein a label content in the associated event sub-label is associated with an information content in the first guide information.

The image display method provided by at least one embodiment of the present disclosure further includes:
the second display image further includes an information display area;
the displaying, in the second display image, a recommendation sub-label in the target label and recommendation information corresponding to the recommendation sub-label, or displaying, in the second display image, an associated event sub-label of the second display image and event information corresponding to the associated event sub-label includes: displaying, in the information display area, the recommendation information or the event information in response to a trigger operation on the recommendation sub-label or the associated event sub-label, wherein the selected label display area of the recommendation sub-label or the associated event sub-label is communicated with the information display area.

The image display method provided by at least one embodiment of the present disclosure further includes:
updating a display content of the second display image in response to a trigger operation on any of the recommendation information, wherein the display content after updating is an associated content of the triggered recommendation information; or, updating a display content of the second display image in response to a trigger operation on the event information, wherein the display content after updating is an associated content of the triggered event information.

The image display method provided by at least one embodiment of the present disclosure further includes:
the first guide information or the second guide information is displayed in a form of a bubble or a floating window.

The image display method provided by at least one embodiment of the present disclosure further includes:
cancelling displaying the first guide information or the second guide information if a display duration of the first guide information or the second guide information meets a duration threshold and the first guide information or the second guide information is not triggered.

The image display method provided by at least one embodiment of the present disclosure further includes:
in response to a setting operation on any label option of the plurality of label options, updating the second label being displayed to the label option being selected.

The image display method provided by at least one embodiment of the present disclosure further includes:
a first guide information display module configured to display a first display image under a first label, and display, in the first display image, first guide information associated with a second label, wherein the second label is a variable label including a plurality of label options, and the first guide information is guide information corresponding to a target label in the plurality of label options; and
an image switching module configured to switch the first display image to a second display image corresponding to the target label in response to a trigger operation on the first guide information, wherein the switched second display image is an associated display image of the first guide information.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An image display method, comprising:
displaying a first display image under a first label, and displaying, in the first display image, first guide information associated with a second label, wherein the second label is a variable label comprising a plurality of label options, and the first guide information is guide information corresponding to a target label in the plurality of label options; and
switching the first display image to a second display image corresponding to the target label in response to a trigger operation on the first guide information, wherein the second display image after switching is a display image associated with the first guide information.

2. The method according to claim 1, wherein the first guide information is displayed in a preset area of the first display image, the preset area further comprises the second label, and the method further comprises:
determining whether to switch to the second display image based on a current display state of the second label in response to a trigger operation of a user on the second label.

3. The method according to claim 2, wherein the determining whether to switch to the second display image based on a current display state of the second label comprises:
if a current display state of the second label is displaying the target label, switching the first display image to the second display image.

4. The method according to claim 2, wherein the determining whether to switch to the second display image based on a current display state of the second label comprises:
ifthe current display state of the second label is displaying a non-target label comprised in the second label, switching the first display image to a third display image corresponding to the non-target label and displaying second guide information in the third display image, wherein the second guide information is guide information corresponding to the target label.

5. The method according to claim 4, further comprising:
switching the third display image to the second display image corresponding to the target label in response to a trigger operation on the second guide information.

6. The method according to claim 4, wherein the third display image further comprises a display area displaying the plurality of label options, and the second guide information is displayed in an associated position of the target label in the display area; and
the method further comprises:
switching the third display image to the second display image corresponding to the target label in response to a trigger operation on the target label in the display area.

7. The method according to claim 2, wherein, when the current display state of the second label is displaying a non-target label comprised in the second label, the first guide information comprises target label information and event overview information corresponding to the second display image; and
when the current display state of the second label is displaying the target label, the first guide information comprises event overview information corresponding to the second display image.

8. The method according to claim 4, wherein the second guide information comprises event overview information corresponding to the second display image.

9. The method according to claim 7 or 8, wherein a method of determining the event overview information comprises:
determining an event attention degree of each event in a resource under the target label, determining a target event based on the event attention degree, and extracting event overview information of the target event; or,
determining a content event of the first display image, and extracting event overview information of the content event if the content event has a corresponding relationship with the target label.

10. The method according to any of claims 1-9, further comprising:
displaying, in the second display image, a recommendation sub-label in the target label and recommendation information corresponding to the recommendation sub-label, and/or displaying, in the second display image, an associated event sub-label of the second display image and event information corresponding to the associated event sub-label, wherein a label content in the associated event sub-label is associated with an information content in the first guide information.

11. The method according to claim 10, wherein the second display image further comprises an information display area;
the displaying, in the second display image, a recommendation sub-label in the target label and recommendation information corresponding to the recommendation sub-label, or displaying, in the second display image, an associated event sub-label of the second display image and event information corresponding to the associated event sub-label comprises:
displaying, in the information display area, the recommendation information or the event information in response to a trigger operation on the recommendation sub-label or the associated event sub-label, wherein the selected label display area of the recommendation sub-label or the associated event sub-label is communicated with the information display area.

12. The method according to claim 10 or 11, further comprising:
updating a display content of the second display image in response to a trigger operation on any of the recommendation information, wherein the display content after updating is an associated content of the triggered recommendation information;
or,
updating a display content of the second display image in response to a trigger operation on the event information, wherein the display content after updating is an associated content of the triggered event information.

13. The method according to any one of claims 4-6, and 8, wherein the first guide information or the second guide information is displayed in a form of a bubble or a floating window.

14. The method according to any one of claims 4-6, 8 and 13, further comprising:
cancelling displaying the first guide information or the second guide information if a display duration of the first guide information or the second guide information meets a duration threshold and the first guide information or the second guide information is not triggered.

15. The method according to any one of claims 1-14, further comprising:
in response to a setting operation on any label option of the plurality of label options, updating the second label being displayed to the label option being selected.

16. An image display apparatus, comprising:
a first guide information display module configured to display a first display image under a first label, and display, in the first display image, first guide information associated with a second label, wherein the second label is a variable label comprising a plurality of label options, and the first guide information is guide information corresponding to a target label in the plurality of label options; and
an image switching module configured to switch the first display image to a second display image corresponding to the target label in response to a trigger operation on the first guide information, wherein the switched second display image is an associated display image of the first guide information.

17. An electronic device, comprising:
one or more processors; and
a storage apparatus configured to store one or more programs,
wherein, the one or more programs, when executed by the one or more processors, causes the one or more processors to implement the image display method according to any one of claims 1 to 15.

18. A storage medium comprising computer-executable instructions, which, when executed by a computer processor, are used to perform the image display method according to any one of claims 1-15.
